# EUROPÄISCHE PATENTANMELDUNG

(11) **EP 1 382 260 A2**
(43) Veröffentlichungstag der Anmeldung: **21.01.2004**
(21) Anmeldenummer: 03015136.9
(22) Anmeldetag: 04.07.2003
(51) Int. Cl.: A21D 2/02, A21D 10/00, A23L 1/03, F24C 1/00

(54) **Gas freisetzender Zusatzstoff zur Zubereitung von Nahrungsmitteln, Nahrungsmittelvorbereitung sowie Verfahren zur Erkennung des Zustands eines Nahrungsmittels und Backofen**

(30) Priorität: 11.07.2002 DE 10232133
(71) Anmelder: E.G.O. ELEKTRO-GERÄTEBAU GmbH, D-75038 Oberderdingen (DE)
(72) Erfinder: Dorwarth, Ralf, Dr., 75038 Oberderdingen (DE); Weber, Jürgen, 75056 Sulzfeld (DE)
(74) Vertreter: Patentanwälte Ruff, Wilhelm, Beier, Dauster & Partner

(57) **Zusammenfassung**

Durch die Erfindung ist es beispielsweise möglich, einen Zusatzstoff (19) sowie ein Verfahren zur Erkennung des Zustands eines Nahrungsmittels zu schaffen, bei dem der Zusatzstoff (19) nach einer oder für eine bestimmte Zeit, die nahrungsmittelabhängig ist, die Entwicklung eines Gases (20) bewirkt. Dieses Gas (20) wird mit einem entsprechenden Gassensor (27) erkannt und von einer Steuerung (22) mit in eine Speicher (25) abgespeicherten Werten verglichen. Dabei gilt die Gaskonzentration (Q) als Anhaltswert für den Zustand des Nahrungsmittels. Das Nahrungsmittel kann vorteilhaft eine Backmischung (18) sein.

## Beschreibung

### Anwendungsgebiet und Stand der Technik

Die Erfindung betrifft einen Zusatzstoff zur Zubereitung von Nahrungsmitteln, eine Nahrungsmittelvorbereitung, insbesondere Backmischung, ein Verfahren zur Erkennung des Zustands eines Nahrungsmittels sowie einen dafür geeigneten Backofen.

Im Bereich des automatischen Kochens oder Backens mit Sensoren, insbesondere Gassensoren, gibt es viele Ansätze. Diese Ansätze besitzen sämtlich die Nachteile, dass zum einen sehr viele verschiedene Backrezepte existieren und somit eine Automatisierung oder Steuerung des Vorgangs nur möglich ist, wenn das genaue Backrezept bekannt ist.

Es gibt auch Fertigbackmischungen, die aufgrund ihrer im wesentlichen vorgegebenen Zusammensetzung relativ gleiche Ergebnisse liefern bei Einhalten des vorgeschriebenen Zubereitungsvorgangs. Hier besteht häufig das Problem, dass Personen, die eine Fertigbackmischung verwenden, keine oder wenig Erfahrung haben mit Backen. Diesen Personen fällt es nicht leicht, die vorgegebenen Anweisungen für eine bestimmte Fertigbackmischung oder Zubereitung einzuhalten, um das gewünschte Ergebnis zu erlangen.

### Aufgabe und Lösung

Der Erfindung liegt die Aufgabe zugrunde, einen eingangs genannten Zusatzstoff, eine Nahrungsmittelvorbereitung, ein Verfahren zur Erkennung des Zustands eines Nahrungsmittels sowie einen Backofen zu schaffen, durch die eine Erkennung des Zustands des Nahrungsmittels oder der Nahrungsmittelvorbereitung möglich ist.

Gelöst wird diese Aufgabe durch einen Zusatzstoff mit den Merkmalen des Anspruchs 1, eine Nahrungsmittelvorbereitung mit den Merkmalen des Anspruchs 5, ein Verfahren mit den Merkmalen des Anspruchs 8 und einen Backofen mit den Merkmalen des Anspruchs 12.

Erfindungsgemäß bewirkt der Zusatzstoff nach einer bestimmten Zeit, bei Erreichen einer bestimmten Temperatur oder für eine bestimmte Zeit oder während eines bestimmten Temperaturprofils über einer Zeit eine Gasentwicklung. Das bei dieser Gasentwicklung entstehende Gas ist dafür ausgelegt, dass es mit einem entsprechenden Gassensor erkennbar ist. Es wird quasi ein Indikatorgas erzeugt und mit einem Gassensor detektiert. Abhängig von der Detektion durch den Gassensor kann entweder ein Zubereitungsvorgang des Nahrungsmittels gestoppt oder verändert werden. Die Gasentwicklung kann beispielsweise als Endpunkt eines Zubereitungsvorganges oder als Zwischenstufe verwendet werden. Ebenso kann eine Nahrungsmittelzubereitung abgebrochen werden, wenn das Gas nicht mehr vorhanden ist oder unter eine bestimmte Konzentration abfällt.

Der Zusatzstoff kann einerseits entweder für sich alleine eine Gasentwicklung bewirken. Des weiteren ist es möglich, ihn so auszugestalten, dass er in Verbindung mit dem Nahrungsmittel, beispielsweise einer Backmischung, die gewünschte Gasentwicklung bewirkt. Der Zusatzstoff kann entweder selber seinen Zustand ändern. Alternativ kann er in Zusammenwirkung mit einem Bestandteil des Nahrungsmittels eine Zustandsänderung hervorrufen oder direkt eine Gasentwicklung bewirken.

Insbesondere kann für die Steuerung eines Zubereitungsvorgangs eines Nahrungsmittels vorgesehen sein, dass der Zusatzstoff eine Gasentwicklung nach einer bestimmten Zeit bei einer bestimmten Temperatur bewirkt. Das bedeutet, wenn der Zusatzstoff beispielsweise für 40 Minuten einer Temperatur von 180°C ausgesetzt ist, er daraufhin eine Gasentwicklung bewirkt. Ähnlich hierzu kann der Zusatzstoff nach seiner Zusammensetzung sowie seinem Mengenanteil derart ausgelegt sein, dass er beispielsweise bei den vorgenannten Bedingungen restlos vergast ist bzw. keine weitere Gasentwicklung mehr hervorruft. Während im vorhergehenden Fall das Beginnen einer Gasentwicklung bzw. Überschreiten einer bestimmten Konzentration als Stopsignal verwendet werden kann, kann im zweiten Fall das Ende der Gasentwicklung bzw. Unterschreiten einer bestimmten Konzentration als Stopsignal herangezogen werden.

Des weiteren sollte der Zusatzstoff natürlich oder naturidentisch sein. Dies fördert eine Verwendung in den Nahrungsmitteln.

Des weiteren wird eben eine erfindungsgemäße Nahrungsmittelvorbereitung geschaffen, die einen Zusatzstoff enthält, wie er vorgehend beschrieben worden ist. Besonders bevorzugt ist eine solche Nahrungsmittelvorbereitung eine Backmischung, insbesondere eine Fertigbackmischung. In einem Backofen kann wegen der geschlossenen Muffel eine Gasdetektierung viel besser stattfinden.

Eine solche Nahrungsmittelvorbereitung kann beispielsweise mehrere Zusatzstoffe enthalten, die bei verschiedenen Zeiten und/oder Temperaturen jeweils eine Gasentwicklung bewirken. So ist es möglich, ein Zubereitungsprofil der Nahrungsmittelvorbereitung hinsichtlich Zeit und Temperatur zu erkennen. Dies kann vor allem für Nahrungsmittel von Vorteil sein, bei denen während der Zubereitung die Temperatur verändert werden muss.

In weiterer Ausgestaltung der Erfindung kann vorgesehen sein, dass vorgenannte Zusatzstoffe die Entwicklung verschiedener Gase bewirken. Diese können unterschiedlich erkennbar sein und somit unterschiedliche, jeweils eindeutige Signale erzeugen. Dadurch ist eine Bestimmung eines vorgenannten Profils besonders gut möglich.

Ein erfindungsgemäßes Verfahren, mit dem der Zustand eines Nahrungsmittels erkannt werden kann, basiert auf einem Zusatzstoff in dem Nahrungsmittel, wie er vorstehend beschrieben worden ist. Dabei kann die Gaskonzentration oder Gaszusammensetzung, die das Nahrungsmittel umgibt, erfasst werden. In einem Speicher, der beispielsweise in einer Steuerung für eine Heizeinrichtung wie einen Backofen oder dergleichen angeordnet sein kann, können Messwerte oder Verläufe der Gaskonzentration oder der Gaszusammensetzung gespeichert werden. Diese Messwerte oder Verläufe können von der Zeit und/oder der Temperatur abhängen. Die Messwerte oder Verläufe können somit Referenz-Daten bilden. Sie können für einen Vergleich herangezogen werden, auf dem aufbauend ein Zubereitungsverfahren gesteuert wird.

Bei der Zubereitung eines Nahrungsmittels kann erneut die Gaskonzentration oder Gaszusammensetzung erfasst werden und mit den abgespeicherten Referenz-Daten verglichen werden. So kann der bei den abgespeicherten Referenz-Daten festgelegte Zustand des Nahrungsmittels anhand der jeweils charakteristischen Gaskonzentration oder -zusammensetzung ermittelt werden. Dabei sollten in den Referenz-Daten beispielsweise äußere Bedingungen wie die Art des Nahrungsmittels und die Menge festgelegt werden. Die Auswahl der Referenz-Daten erfolgt u.a. anhand dieser äußeren Bedingungen, so dass sie übereinstimmen sollen.

Zur Vereinfachung des Verfahrens kann vorgesehen sein, dass die Referenz-Daten werkseitig ermittelt, festgelegt und in den Speicher eingespeichert werden. Somit können solche Datensätze in einer Vielzahl von Speichern eingespeichert werden.

Schließlich betrifft die Erfindung einen Backofen mit den Merkmalen des Anspruchs 12. Er weist eine Muffel und wenigstens eine Heizeinrichtung auf. Ein Gassensor kann der Muffel zugeordnet oder in dieser angeordnet sein. Er sollte zur Erkennung einer Gasentwicklung eines Zusatzstoffes ausgebildet sein, wie er vorstehend beschrieben worden ist. Ein solcher Backofen ist besonders gut geeignet zur Durchführung des zuvor beschriebenen Verfahrens.

Der Backofen kann des weiteren eine Auswerte-/ Steuerelektronik aufweisen. Diese kann mit dem Gassensor verbunden sein. Des weiteren beeinflusst die Elektronik die Heizeinrichtung, beispielsweise hinsichtlich Zeit und/oder Temperatur, also hinsichtlich der zugeführten Energie. Die Steuerung der Heizeinrichtung erfolgt gemäß dem vorbeschriebenen Verfahren in Abhängigkeit von der Detektierung einer Gasentwicklung, sei es beginnend oder aussetzend. Für die Detektierung können der eine oder mehrere Gassensoren vorgesehen sein.

Der Vorteil des Vorsehens mehrerer Gassensoren kann darin liegen, dass diese unterschiedliche Gase und somit unter Umständen unterschiedliche Zusatzstoffe erkennen können. Als Gassensoren eignen sich besonders Gas-Chromatographen. Diese sind mittlerweile technisch beherrschbar und wirtschaftlich verwendbar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

Ein Ausführungsbeispiel der Erfindung ist in den Zeichnungen dargestellt und wird im folgenden näher erläutert. In den Zeichnungen zeigen:
- Fig. 1: eine schematische Darstellung eines erfindungsgemäßen Backofens mit Gassensor und einer erfindungsgemäßen Backmischung mit Zusatzstoffen darin und
- Fig. 2: verschiedene Verläufe von Gaskonzentrationen über der Zeit.

### Detaillierte Beschreibung des Ausführungsbeispiels

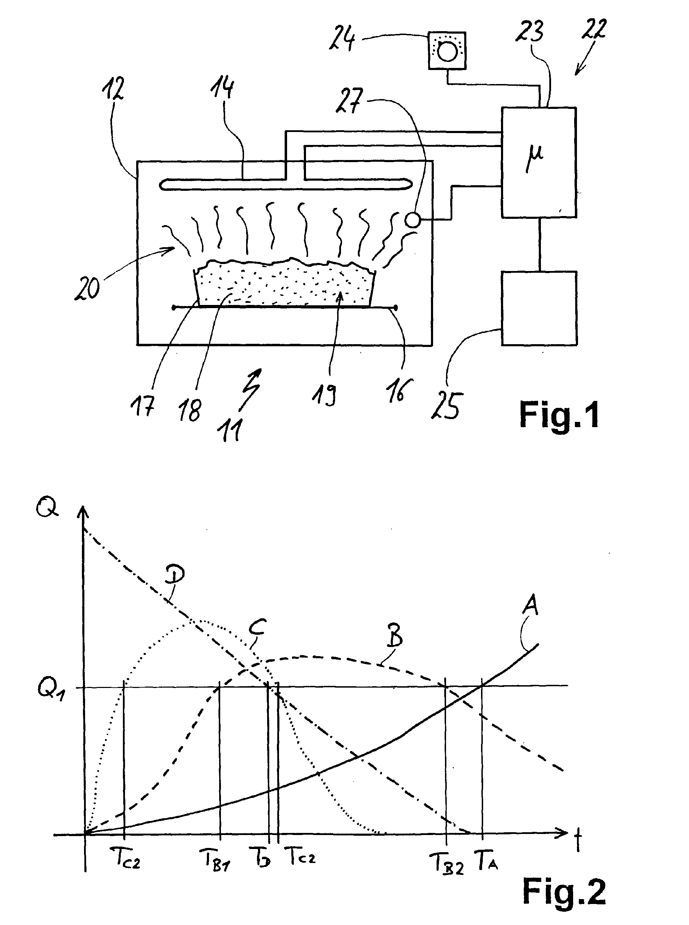

In Fig. 1 ist ein Backofen 11 mit einer üblichen Muffel 12 dargestellt. Wie zuvor ausgeführt, ist zu beachten, dass Fig. 1 wie auch Fig. 2 vor allem schematisch zu verstehen sind und nur dazu dienen, das Erfindungsprinzip im groben zu erläutern.

In der Muffel 12 ist eine Heizung 14 angeordnet, beispielsweise ein üblicher Oberhitze-Rohrheizkörper. Des weiteren ist in der Muffel 12 ein Gitter 16 vorgesehen, auf welchem eine Backform 17 ruht. In der Backform 17 befindet sich eine Backmischung 18, welche einen erfindungsgemäßen Zusatzstoff 19 enthält. Wie aus Fig. 1 zu erkennen ist, ist der Zusatzstoff 19 in der Backmischung 18 einigermaßen gleich verteilt. Andeutungsweise ist eine Gasentwicklung 20 dargestellt. Diese beruht neben üblicher Dampfentwicklung, welche durch einen Backvorgang hervorgerufen wird, vor allem auf der Erhitzung des Zusatzstoffes 19 in der Backmischung 18.

Üblicherweise entsteht bei einem Backvorgang ein Gasgemisch aus einer Vielzahl von Gasen und auch Dämpfen. Mit der Gasentwicklung 20 soll jedoch vor allem die Entwicklung eines bestimmten Gases, hervorgerufen durch den Zusatzstoff 19 verdeutlicht werden. Der Verlauf der Konzentration des Gases, in Fig. 2 mit Q bezeichnet, ist in Fig. 2 für vier verschiedene Fälle dargestellt und wird an entsprechender Stelle näher erläutert.

Der Backofen 11 weist eine Steuerung 22 auf. Diese umfasst noch einen Mikroprozessor 23, der die hauptsächliche Steuerungsaufgabe übernimmt. Der Mikroprozessor 23 ist mit einer Eingabeeinrichtung 24 verbunden. Diese kann, wie schematisch dargestellt, ein Drehwähler oder dergleichen sein. Ebenso möglich ist hier eine aufwendige Eingabeeinrichtung, beispielsweise mit Tasten oder sogar einer Tastatur. Mit der Eingabeeinrichtung 24 können Backprozesse gesteuert werden. Weitere Möglichkeiten werden nachfolgend erläutert.

Des weiteren ist der Mikroprozessor 23 mit einem Speicher 25 verbunden. In diesem können Werte, beispielweise in etwa entsprechend den Verläufen der Gaskonzentration Q gemäß Fig. 2, abgespeichert werden.

Diese Werte werden zur Erkennung des Zustands der Backmischung 18 bzw. eines daraus entstehenden Backgutes verwendet.

Schließlich weist die Steuerung 22 einen Gassensor 27 auf. Dieser ist innerhalb der Muffel 12 angeordnet und mit dem Mikroprozessor 23 verbunden. Die Anordnung des Gassensors 27 in der Muffel 12 ist dabei derart gewählt, dass eine Gasentwicklung 20 den Gassensor 27 möglichst voll trifft. Hierbei ist zu beachten, dass die Anordnung des Gassensors 27 bezüglich der Gaskonzentration Q eine Rolle spielt und stets gleich bleiben sollte.

In Fig. 2 sind vier Verläufe A bis D für eine mögliche Gaskonzentration Q über der Zeit t dargestellt. Die vereinfachte Darstellung in Fig. 2 geht davon aus, dass über die Zeit t hinweg die Muffel 12 gleichmäßig beheizt wird. Insbesondere herrscht wie bei den meisten Backvorgängen zum Zeitpunkt t=0 bereits die für eine Backmischung 18 vorgegebene Temperatur.

Die Form der Verläufe A bis D hängt von der Art der Zusatzstoffe 19 sowie deren Gasentwicklung bei bestimmten Temperatur-/ Zeitverhältnissen ab. Unterschiedliche Zusatzstoffe können unterschiedliche Verläufe A bis D erzeugen und, je nach Zubereitungsverfahren, für eine Backmischung 18 geeignet sein.

Der durchgezogene Verlauf A setzt ein, wenn noch keine Gaskonzentration vorhanden ist. Der Verlauf steigt langsam und mit zunehmender Steigung an. Zu einem Zeitpunkt T_{A} erreicht die Gaskonzentration Q des Verlaufs A einen festgelegten Wert Q₁. Dieser Wert Q₁, der beispielhaft für alle Verläufe als Indexwert herangenommen wird, gibt eine Gaskonzentration an, bei der aus dem Verlauf A auf die Zeit T_{A} geschlossen werden kann. Vor allem aber lässt sich daraus auf einen bestimmten Zustand schließen, den die Backmischung 18 zu dem Zeitpunkt T_{A} hat.

Dieser Zustand bei T_{A} wird erfindungsgemäß als ein Fertigstellen des Backgutes angesehen. Somit gibt die Zeit T_{A} nicht unbedingt immer eine genau gleiche Zeit an. Vielmehr gibt die Zeit T_{A} die Zeit an, zu der das Backgut einen definierten Zustand, beispielsweise den Endzustand, erreicht hat.

Der gestrichelt dargestellte Verlauf B startet ebenfalls bei einer Gaskonzentration Q von 0. Er steigt allerdings schneller an, erreicht zu einem Zeitpunkt T_{B1} die Konzentration Q₁. Nach einer gewissen Zeit fällt der Verlauf B wieder ab und passiert zu einem Zeitpunkt T_{B2} erneut die Konzentration Q₁. Von da ab fällt der Verlauf weiter ab.

Aus einem solchen Verlauf B lassen sich beispielsweise zwei Zeiten, nämlich T_{B1} und T_{B2}, bzw., entsprechend der vorstehenden Schilderung, zwei definierte Zustände der Backmischung 18 bzw. des Backgutes zu diesen Zeitpunkten feststellen.

Ein Verlauf ähnlich dem Verlauf B kann beispielsweise dann herangezogen werden, wenn ein Backvorgang mit einer Änderung eines Parameters, beispielsweise der Temperatur oder der Hitzeverteilung in der Muffel 12, verbunden ist.

Der punktiert dargestellte Verlauf C entspricht im wesentlichen dem Verlauf B, allerdings ist hier der Verlauf zeitlich stark gestaucht. Auch hier gibt es zwei Zustände der Backmischung 18, gekennzeichnet jeweils durch Passieren des Verlaufs C bei der bestimmten Konzentration Q₁, in Fig. 2 entsprechend dargestellt durch die Zeiten T_{C1} und T_{C2}. Hier ist zu erkennen, wie nach einer bestimmten Zeit die Gaskonzentration Q zu 0 wird. Der Zusatzstoff 19 bewirkt dann keine Gasentwicklung 20 mehr.

Der Verlauf D, der strichpunktiert dargestellt ist, fängt zum Zeitpunkt t=0 mit einem hohen Wert an. Von da an fällt der Verlauf D in etwa linear ab, wobei er zum Zeitpunkt T_{D} die Konzentration Q₁ aufweist. Ein Zusatzstoff 19, der einen Verlauf D seiner Gasentwicklung 20 bzw. der Gaskonzentration Q hervorruft, beginnt also sozusagen sofort mit Erwärmung mit der Gasentwicklung 20. Diese verläuft dann in etwa linear abnehmend.

Wie bereits ausgeführt worden ist, soll durch das erfindungsgemäße Verfahren nicht die Ermittlung einer bestimmten Zeit T über einen der Verläufe der Gaskonzentration Q in Zusammenwirkung mit dem Passieren eines Grenzwertes Q₁ festgestellt werden. Vielmehr soll durch die Verläufe A bis D in Fig. 2 dargestellt werden, welche Gasentwicklung Q ein Zusatzstoff 19 abhängig von seinem Zustand oder dem Zustand der Backmischung 18, welche auch über die Zeit veränderlich ist, anzeigen.

So kann beispielsweise aus dem Verlauf B zum Zeitpunkt T_{B1}, zu dem der Verlauf B nämlich die Konzentration Q₁ erreicht, geschlossen werden, dass der Zusatzstoff 19 bzw. die Backmischung 18 bereits einen gewissen Zustand erreicht hat. Abhängig von der verwendeten Backmischung 18 kann dann die Temperatur in der Muffel 12 gesenkt oder erhöht werden. Ein erneutes Passieren des Verlaufs B einer bestimmte Gaskonzentration, beispielsweise wieder Q₁, zeigt an, dass nun der Zusatzstoff 19 oder die Backmischung 18 einen bestimmten Zustand erreicht haben. Das Backgut ist dann beispielsweise fertig. Ebenso kann es möglich sein, diesen Punkt als Ausgangspunkt für eine fest definierte Zeit anzusehen, so dass beispielsweise ab nun noch für fünf Minuten mit einer bestimmten Temperatur weitergeheizt wird.

In dem Speicher 25 werden beispielsweise Verläufe A bis D wie in Fig. 2 dargestellt abgespeichert. Insbesondere wird abgespeichert, welchen Zustand eine genau definierte Backmischung 18 mit einem bekannten Zusatzstoff 19 an welchem Punkt des Verlaufs der Konzentration Q aufweist. Somit kanri entweder aus dem Passieren eines festgelegten Wertes Q, beispielsweise Q₁, oder einer laufenden Überwachung der Gaskonzentration Q auf den Zustand sowie eine Fertigstellung des Backgutes geschlossen werden.

Die Verläufe A bis D werden vorzugsweise werkseitig in den Speicher 25 eingespeichert. Dies erfolgt unter Zuordnung bestimmter, genau vorgegebener oder klassifizierter Backmischungen. Dabei sind die Backmischungen nicht nur bezüglich ihrer Art, sondern auch bezüglich ihrer Menge sowie des beigesetzten Zusatzstoffes bestimmt. Über die Eingabeeinrichtung 24 kann ein Benutzer eine bestimmte, sozusagen abgespeicherte, Backmischung wählen. Die Steuerung 22 kann dann die Heizung 14 gemäß den zugehörigen Parametern ansteuern. Stellt der Gassensor 27 eine bestimmte Gaskonzentration bei der Gasentwicklung 20 fest, wird der Backvorgang verändert oder gestoppt.

## Patentansprüche

1. Zusatzstoff zur Zubereitung von Nahrungsmitteln, insbesondere für Backmischungen (18), **dadurch gekennzeichnet, dass** der Zusatzstoff (19) nach einer oder für eine bestimmte Zeit und/oder Temperatur die Entwicklung eines Gases (20) bewirkt, wobei dieses Gas mittels eines entsprechenden Gassensors (27) erkennbar ist.

2. Zusatzstoff nach Anspruch 1, **dadurch gekennzeichnet, dass** er eine Gasentwicklung (20) in Verbindung mit dem Nahrungsmittel bzw. einer Backmischung (18) bewirkt, vorzugsweise nachdem ein Bestandteil des Nahrungsmittels oder der Zusatzstoff (19) selber seinen Zustand geändert hat.

3. Zusatzstoff nach Anspruch 1 oder 2, **dadurch gekennzeichnet, dass** der Zusatzstoff (19) eine Gasentwicklung (20) nach einer bestimmten Zeit bei einer bestimmten Temperatur bewirkt.

4. Zusatzstoff nach einem der vorhergehenden Ansprüche, **dadurch gekennzeichnet, dass** der Zusatzstoff (19) natürlich oder naturidentisch ist.

5. Nahrungsmittelvorbereitung, insbesondere Backmischung (18) oder Fertigbackmischung, **gekennzeichnet durch** wenigstens einen Zusatzstoff (19) nach einem der vorhergehenden Ansprüche.

6. Nahrungsmittelvorbereitung nach Anspruch 5, **dadurch gekennzeichnet, dass** sie mehrere Zusatzstoffe (19) enthält, die bei verschiedenen Zeiten und/oder Temperaturen eine Gasentwicklung (20) bewirken zur Erkennung eines Zubereitungsprofils hinsichtlich Zeit und Temperatur.

7. Nahrungsmittelvorbereitung nach Anspruch 5 oder 6, **dadurch gekennzeichnet, dass** die Zusatzstoffe (19) die Entwicklung verschiedener Gase (20) bewirken, welche unterschiedlich erkennbar sind.

8. Verfahren zur Erkennung des Zustandes eines Nahrungsmittels, insbesondere einer Backmischung (18), wobei dem Nahrungsmittel wenigstens ein Zusatzstoff (19) nach einem der Ansprüche 1 bis 4 zugesetzt ist.

9. Verfahren nach Anspruch 8, **dadurch gekennzeichnet, dass** die Gaskonzentration (Q) oder Gaszusammensetzung erfasst wird und in einem Speicher (25) Messwerte oder Verläufe (A-D) der Gaskonzentration oder Gaszusammensetzung in Abhängigkeit von der Zeit und/oder der Temperatur abgespeichert werden, wobei vorzugsweise diese Messwerte oder Verläufe als Referenz-Daten abgespeichert werden.

10. Verfahren nach Anspruch 9, **dadurch gekennzeichnet, dass** während einer Nahrungsmittelzubereitung die Gaskonzentration (Q) oder Gaszusammensetzung erfasst wird und mit abgespeicherten Referenzdaten verglichen wird zur Auswertung des Zustands des Nahrungsmittels (18), wobei die äußeren Bedingungen für die Erfassung der Referenz-Daten, wie beispielsweise Art des Nahrungsmittels (18) und Menge, mit denjenigen übereinstimmen, deren Zustand erkannt wird.

11. Verfahren nach Anspruch 9 oder 10, **dadurch gekennzeichnet, dass** Referenz-Daten werkseitig ermittelt werden und in den Speicher (25) eingespeichert werden.

12. Backofen mit einer Muffel und wenigstens einer Heizeinrichtung, **dadurch gekennzeichnet, dass** in der Muffel (12) ein Gassensor (27) angeordnet ist, wobei der Gassensor ausgebildet ist zur Erkennung einer Gasentwicklung (20) eines Zusatzstoffes (19) nach einem der Ansprüche 1 bis 4.

13. Backofen nach Anspruch 12, **dadurch gekennzeichnet, dass** eine Auswerte-/ Steuerelektronik (22) mit dem wenigstens einen Gassensor (27) verbunden ist und zur Beeinflussung der Heizeinrichtung (14), insbesondere hinsichtlich Zeit und/oder Temperatur, in Abhängigkeit von der Detektierung einer Gasentwicklung (20) durch den Gassensor (27) ausgebildet ist.

14. Backofen nach Anspruch 12 oder 13, **dadurch gekennzeichnet, dass** in der Muffel (12) mehrere Gassensoren (27) vorgesehen sind, wobei vorzugsweise die Gassensoren für die Detektierung einer Gasentwicklung (20) von unterschiedlichen Gasen bzw. unterschiedlichen Zusatzstoffen (19) ausgebildet sind.

15. Backofen nach einem der Ansprüche 12 bis 14, **dadurch gekennzeichnet, dass** der Gassensor (27) ein Gaschromatograph ist.
